# EUROPEAN PATENT SPECIFICATION

(11) **EP 4 045 435 B1**
(45) Date of publication and mention of the grant of the patent: **11.10.2023**
(21) Application number: 20801407.6
(22) Date of filing: 14.10.2020
(51) Int. Cl.: B65D 65/46

(54) **A MULTILAYER COVER ELEMENT FOR SEALING CAPSULES FOR MAKING BEVERAGES**
MEHRSCHICHTIGES ABDECKELEMENT ZUM VERSCHLIESSEN VON KAPSELN ZUR HERSTELLUNG VON GETRÄNKEN
ÉLÉMENT DE COUVERCLE MULTICOUCHE POUR SCELLER DES CAPSULES POUR LA PRÉPARATION DE BOISSONS

(30) Priority: 18.10.2019 IT 201900019355
(43) Date of publication of application: 24.08.2022
(73) Proprietor: Goglio S.p.A., 20144 Milano (IT)
(72) Inventor: GOGLIO, Franco, 20144 Milano MI (IT); BOSETTI, Osvaldo, 20144 Milano MI (IT); GALBASINI, Roberto, 20144 Milano MI (IT); MACCAGNAN, Andrea, 20144 Milano MI (IT)
(74) Representative: Perani & Partners S.p.A.
(86) International application number: PCT/IB2020/059648
(87) International publication number: WO 2021/074813

(56) References cited:
- WO-A1-2017/063680
- WO-A1-2018/083564
- WO-A1-2018/197676
- WO-A1-2018/203184
- US-A1- 2017 158 422

## Description

The present invention relates to a cover element for capsules for use in making brewed beverages. This cover element is specifically adapted to close capsules adapted to be introduced into automatic and semi-automatic beverage-making machines. By way of example, the capsules comprising the cover element of the present invention are adapted for use in making beverages such as coffee, tea, milk, chocolate, herbal teas and infusions in general.

A cover element for capsules for use in making brewed beverages is known in the art. This cover element is designed to seal a capsule having a housing zone, which is filled with a preparation for making beverages, such as for example coffee grounds.

The cover element comprises a main layer having an inner surface adapted to face a housing zone of a capsule for making brewed beverages. The cover element further has an outer surface opposite to the inner surface.

A protective layer overlies the outer surface of the main layer. A filtering layer underlies the inner surface of the main layer.

The inventors noted the disadvantage that the capsules with an element of known type do not work properly, especially at high humidity.

For example, in a particular machine model, water delivery pressure during beverage dispensing was found to reach a value of 18bar with the known cover element still unbroken. In this case, the pump blocks, and the beverage is not dispensed. In other cases, the capsule may open at pressures above 12bar, thus extending the dispensing times. In the worst cases, partial dispensing may occur or the pump blocks.

The inventors have found that, for normal operation, the capsule may be opened at pressures of less than 12bar and, during dispensing, the pressure must rise to 18bar for optimal dispensing of the beverage.

US 2017158422, which discloses a cover element according to the preamble of claim 1, and WO 2018083564 disclose examples of cover elements having cuts to facilitate rupture. US 2017158422 provides cuts that also reach the filtering layer. In the case of WO 2018083564, a metallic waterproof layer may be provided, which is the outermost or innermost of all, and at least partially receives the cuts in its thickness. The preferred examples as described above show cuts that extend at least partially through all the layers.

### SUMMARY OF THE INVENTION

Therefore, the technical purpose of the present invention is to provide a cover element for sealing capsules for use in making brewed beverages that can obviate the aforementioned prior art drawbacks.

Specifically, an object of the present invention is to provide a cover element for sealing capsules for use in making brewed beverages capable of reliably breaking during beverage dispensing when exposed to a predetermined pressure.

The aforementioned technical purpose and objects are substantially fulfilled by a cover element for sealing capsules for use in making brewed beverages, that comprises the technical features as disclosed in one or more of the accompanying claims.

In particular, a covering element for sealing capsules for use in making brewed beverages according to the present invention comprises a main layer. This main layer has an inner surface adapted to face a housing zone of a capsule for making brewed beverages. The main layer further has an outer surface opposite to the inner surface. The main layer is made of a compostable material.

A protective layer overlies the outer surface of the main layer.

A filtering layer underlies the inner surface of the main layer.

At least the main layer has a plurality of lines of weakness formed at least on said outer surface.

This cover element solves the technical problem, as the lines of weakness are calibrated to break under a predetermined pressure, and allow proper dispensing of the beverage.

In the preferred embodiment, a waterproof layer, which comprises at least one metallic layer, is arranged between the main layer and the filtering layer. The waterproof layer and the filtering layer are free of lines of weakness. Therefore, until dispensing occurs, the capsule is properly sealed. Upon breaking, the filtering layer is in any case in a protected position with respect to the lines of weakness due to the presence of the waterproof layer. Therefore, dispensing may advantageously occur without requiring the filtering layer to be also broken, and allowing it to properly accomplish its filtering functions.

### LIST OF DRAWINGS

Further features and advantages of the present invention will result more clearly from the illustrative, non-limiting description of a preferred, non-exclusive embodiment of a cover element for sealing capsules for use in making brewed beverages as shown in the accompanying drawings, in which:
- Figure 1 is a schematic sectional view of a first embodiment of a cover element for sealing capsules for use in making brewed beverages according to the present invention;
- Figure 2 is a schematic sectional view of a second embodiment of a cover element for sealing capsules for use in making brewed beverages according to the present invention; and
- Figure 3 is a schematic sectional side view of a capsule for use in making brewed beverages.

### DETAILED DESCRIPTION

Referring to the accompanying figures, numeral 1 designates a cover element of the present invention. The cover element 1 is adapted to be applied to a capsule 100 for use in making brewed beverages. In particular, the cover element 1 is adapted to seal a capsule 100.

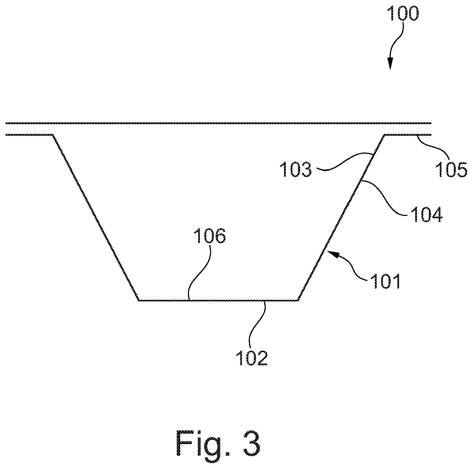

By way of example, a capsule 100 is schematically shown in Figure 3. This capsule 100 comprises an enclosure 101, preferably made of compostable material. A housing zone 106, having an opening 103 is defined in the enclosure 101. This enclosure 101 is generally frustoconical in shape and has a bottom 102.

The aforementioned opening 103 is opposite to the bottom 102. The enclosure 101 comprises a side wall 104, converging from the opening 103 toward the bottom 102. A flange 105 is provided at the opening 103. A preparation, for example in powder form, for making brewed drinks is generally placed inside the housing zone 106.

In operation, the cover element 1 of the present invention is arranged to close the aforementioned opening 103. The cover element 1 comprises a main layer 2, in particular made of a compostable material. This main layer 2 has an inner surface 2a which, in operation, faces the housing zone 106. An outer surface 2b is opposite to the inner surface 2a. The main layer 2 at least partially defines a bearing structure of the cover element 1. Furthermore, the main layer 2 is made of a compostable material, preferably cellophane.

Additional layers are joined to the main layer 2, and will be described in detail hereinunder. For this purpose, the position of these layers will be identified with respect to the main layer 2 by the terms "above" and "below". Such terms shall not be understood as limiting the orientation of either the cover element 1 or the capsule 100, which may be any orientation. Conversely, these terms are only used for the sake of simplicity and more comprehensive description. As used herein, the term "below" is used to identify a direction and/or a position from the cover element 1 toward the interior of the capsule 100, and the term "above" is used to indicate a direction from the cover element 1 toward the outside environment.

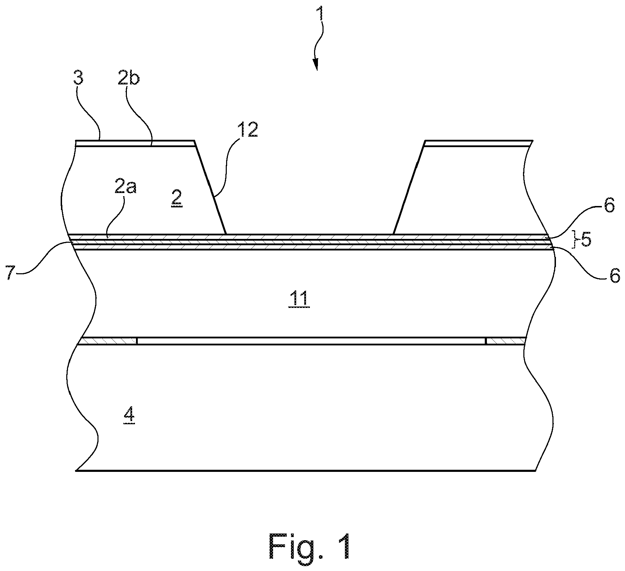

More in detail, a protective layer 3 overlies the outer surface 2b of the main layer 2. This protective layer 3 is particularly defined by lacquer, and directly faces the outer environment. It should be noted that, in the embodiment as shown in Figure 1, the protective layer 3 is applied directly at the outer surface 2b of the main layer 2. Preferably, the protective layer 3 is defined by a lacquer that is well-known to the skilled person, and will not be further described herein.

A filtering layer 4 underlies the inner surface 2a of the main layer 2. This filtering layer 4 has the purpose to hold the content of the capsule 100 and prevent it from escaping as the beverage is being dispensed. In both the illustrated embodiments, the filtering layer 4 directly faces the housing zone 106 located inside the capsule 100. This filtering layer 4 may be made of any food-grade material that is known to the skilled person, by way of example PLA nonwoven.

In order to prevent moisture ingress into the capsule 100, the cover element 1 is provided with a waterproof layer 5. As shown for example in Figure 1, the waterproof layer may be defined by a pair of metallic layers 6 bonded together by an adhesive layer 7. In this case, the waterproof layer 5 is applied to the inner surface 2a of the main layer 2.

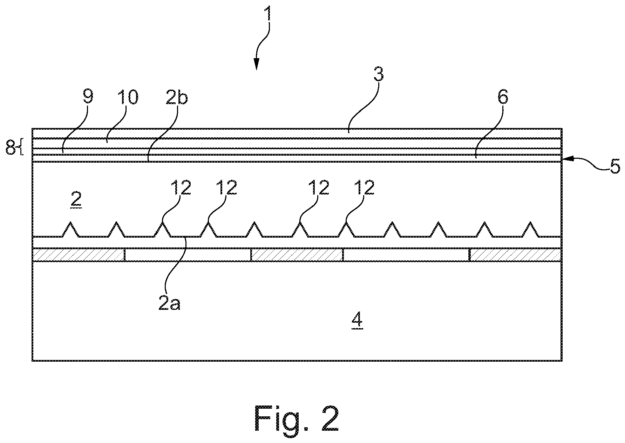

In the embodiment as shown in Figure 2, the waterproof layer 5 is defined by a single metallic layer 6 directly applied on the outer surface 2b of the main layer 2.

In both cases, the metallic layers 6 may be made of aluminum and/or aluminum oxide and/or silicon oxide.

Optionally, the cover element has a molded coating 8. As shown in Figure 2, this molded coating 8 comprises a primer layer 9 overlying the waterproof layer 5. An ink layer 10 is arranged between the primer layer 9 and the protective layer 3.

Optionally, as shown for example in Figure 1, the cover element may comprise a reinforcing layer 11 arranged between the inner surface 2a of the main layer 2 and the filtering layer 4. The structural functions of the reinforcing layer 11 are similar to those of the main layer 2. As a result, the reinforcing layer 11 is also made of cellophane.

According to the present invention, at least the main layer 2 has a plurality of lines of weakness 12 formed on at least one of the surfaces 2a, 2b. These lines of weakness 12 are in such arrangement as to allow the main layer 22 to break when a pressure at the inner surface 2a reaches a value ranging from 5 to 15bar, preferably 10bar.

It should be noted that, in the embodiment as shown in Figure 2, the lines of weakness 12 are formed on the inner surface 2a of the main layer 2. Alternatively, the lines of weakness 12 may be formed on the outer surface 2b of the main layer 2. Finally, as shown in the embodiment of Figure 1, the lines of weakness 12 may extend throughout the thickness of the main layer 2.

It should be noted that the lines of weakness 12 may have a variable depth according to the material and thickness of the main layer 2 and more generally the composition of the cover element 1. Preferably, the lines of weakness 12 penetrate the main layer 2 to a length that ranges from 50% to 100%, preferably 80% of the thickness of the main layer 2.

It shall be noted that, in the embodiment of Figure 2, the lines of weakness 12 are defined by notches formed on the main layer 2 by mechanical material removal.

Alternatively, as shown in Figure 1, the lines of weakness 12 are defined by cuts formed by thermal ablation, preferably by means of a laser.

It should be noted that, in the embodiment as shown in Figure 1, the lines of weakness 12 extend through the protective layer 3. This will not affect the seal of the capsule 100, since the underlying area, in particular the waterproof layer 5, remains intact. In this connection, it should be noted that in the embodiment of Figure 1 the reinforcing layer 11 has no lines of weakness 12. There are no lines of weakness also in the filtering layer 4.

As shown in Figure 1, the waterproofing layer 5 arranged between the inner surface 2a of the main layer 2 and the filtering layer 4, and more specifically between the main layer 2 and the reinforcing layer 11, separates a group of layers with the lines of weakness 12, i.e. the main layer 2 and the protective layer 3, from a group of layers without lines of weakness 12, i.e. the waterproof layer 5 itself, the reinforcing layer 11 and the filtering layer 4.

It shall be noted that all the layers 2, 3, 4, 5, 8, 11 are advantageously made of compatible materials or, alternatively, of materials compatible with a composting process.

## Claims

1. A cover element (1) for sealing capsules (100) for use in making brewed beverages, comprising:
- a main layer (2) having an inner surface (2a) adapted to face housing zone (106) of a capsule (100) for making brewed beverages and an outer surface (2b) that faces away from the inner surface (2b), said main layer (2) being made of a compostable material;
- a protective layer (3) overlying the outer surface (2b) of the main layer (2);
- a waterproof layer (5);
- a filtering layer (4) underlying of the inner surface (2a) of the main layer (2); wherein at least said main layer (2) has a plurality of lines of weakness (12) formed at least on said outer surface (2b), said waterproof layer (5) being free of lines of weakness (12),
haracterised in that the waterproof layer (5) is applied on the inner surface (2a) of the main layer (2) and comprises at least one metallic layer (6), and in that said filtering layer (4) is free of lines of weakness.

2. A cover element (1) as claimed in the preceding claim, **characterized in that** said main layer (2) is configured to break at said weakening of weakness (12) when a pressure at said inner surface (2a) attains a value that ranges from 5 to 15bar, preferably 10bar.

3. A cover element (1) as claimed in any of the preceding claims, **characterized in that** said lines of weakness (12) penetrate the main layer (2) to a length that ranges from 50% to 100%, preferably 80% of the thickness of said main layer (2).

4. A cover element (1) as claimed in any of the preceding claims, **characterized in that** said lines of weakness (12) extend through the entire thickness of said main layer (2).

5. A cover element (1) as claimed in any of the preceding claims, **characterized in that** said waterproof layer (5) is arranged between the inner surface (2a) of the main layer (2) and the filtering layer (4).

6. A cover element (1) as claimed in any of the preceding claims, **characterized in that** said lines of weakness (12) are defined by notches formed on said main layer (2) by mechanical material removal.

7. A cover element (1) as claimed in any of claims 1 to 5, **characterized in that** said lines of weakness (12) are defined by cuts made by thermal ablation preferably by means of a laser.

8. A cover element (1) as claimed in any of the preceding claims, **characterized in that** said lines of weakness (12) extend through said protective layer (3).

9. A cover element (1) as claimed in any of the preceding claims, **characterized in that** it comprises a reinforcement layer (11) arranged between the inner surface (2a) of said main layer (2) and said filtering layer (4).

10. A cover element (1) as claimed in the preceding claim, **characterized in that** said reinforcement layer (11) has no lines of weakness (12).

11. A cover element (1) as claimed in any of the preceding claims, **characterized in that** said main layer (2) and/or said reinforcement layer (11) are made of cellophane.

12. A cover element (1) as claimed in any of the preceding claims, **characterized in that** all the layers (2, 3, 4, 5, 8, 11) are made of a material that is compatible with a composting process.

13. A capsule (100) comprising an enclosure (101) preferably made of a compostable material, said enclosure (101) having a housing zone (106) with an opening (103); a cover element (1) as claimed in any of the preceding claims attached to said enclosure (101) for sealing said opening (103); preferably a preparation, more preferably powder, for making brewed beverages placed in said housing zone (106).

## Patentansprüche

1. Abdeckelement (1) zum Abdichten von Kapseln (100) zur Verwendung bei der Herstellung von gebrühten Getränken, umfassend:
- eine Hauptschicht (2), die eine Innenoberfläche (2a) aufweist, die angepasst ist, um der Unterbringungszone
(106) einer Kapsel (100) zugewandt zu sein, um gebrühte Getränke herzustellen, und eine Außenoberfläche (2b), die
von der Innenoberfläche (2b) abgewandt ist, wobei die Hauptschicht (2) aus einem kompostierbaren Material hergestellt ist;
- eine Schutzschicht (3), die über der Außenoberfläche (2b) der Hauptschicht (2) liegt;
- eine wasserdichte Schicht
- eine Filterschicht (4), die unter der Innenoberfläche (2a) der Hauptschicht (2) liegt; wobei
mindestens die Hauptschicht (2) eine Vielzahl von Schwächungslinien (12) aufweist, die mindestens auf der Außenoberfläche (2b) gebildet sind, wobei die wasserdichte Schicht (5) frei von Schwächungslinien ist,
**dadurch gekennzeichnet, dass** die wasserdichte Schicht (5) auf die Innenoberfläche (2a) der Hauptschicht (2) aufgebracht ist und mindestens eine metallische Schicht (6) umfasst, und dass die Filterschicht (4) frei von Schwächungslinien ist.

2. Abdeckelement (1) nach dem vorstehenden Anspruch, **dadurch gekennzeichnet, dass** die Hauptschicht (2) dazu konfiguriert ist, bei der Schwächung der Schwäche (12) zu brechen, wenn ein Druck an der Innenoberfläche (2a) einen Wert erreicht, der im Bereich von 5 bis 15 bar, bevorzugt 10 bar, liegt.

3. Abdeckelement (1) nach einem der vorstehenden Ansprüche, **dadurch gekennzeichnet, dass** die Schwächungslinien (12) in die Hauptschicht (2) auf einer Länge eindringen, die im Bereich von 50 % bis 100 %, bevorzugt 80 % der Dicke der Hauptschicht (2) liegt.

4. Abdichtelement (1) nach einem der vorstehenden Ansprüche, **dadurch gekennzeichnet, dass** sich die Schwächungslinien (12) durch die gesamte Dicke der Hauptschicht (2) erstrecken.

5. Abdeckelement (1) nach einem der vorstehenden Ansprüche, **dadurch gekennzeichnet, dass** die wasserdichte Schicht (5) zwischen der Innenoberfläche (2a) der Hauptschicht (2) und der Filterschicht (4) eingerichtet ist.

6. Abdeckelement (1) nach einem der vorstehenden Ansprüche, **dadurch gekennzeichnet, dass** die Schwächungslinien (12) von Kerben definiert sind, die auf der Hauptschicht (2) durch mechanisches Abheben von Material gebildet sind.

7. Abdeckelement (1) nach einem der Ansprüche 1 bis 5, **dadurch gekennzeichnet, dass** die Schwächungslinien (12) von Schnitten definiert sind, die durch thermische Ablation, bevorzugt mittels eines Lasers, hergestellt sind.

8. Abdeckelement (1) nach einem der vorstehenden Ansprüche, **dadurch gekennzeichnet, dass** die Schwächungslinien (12) von Kerben definiert sind, die sich durch die Schutzschicht (3) erstrecken.

9. Abdeckelement (1) nach einem der vorstehenden Ansprüche, **dadurch gekennzeichnet, dass** es eine Verstärkungsschicht (11) umfasst, die zwischen der Innenoberfläche (2a) der Hauptschicht (2) und der Filterschicht (4) eingerichtet ist.

10. Abdeckelement (1) nach dem vorstehenden Anspruch, **dadurch gekennzeichnet, dass** die Verstärkungsschicht (11) keine Schwächungslinien (12) aufweist.

11. Abdeckelement (1) nach einem der vorstehenden Ansprüche, **dadurch gekennzeichnet, dass** die Hauptschicht (2) und/oder die Verstärkungsschicht (11) aus Cellophan hergestellt ist/sind.

12. Abdeckelement (1) nach einem der vorstehenden Ansprüche, **dadurch gekennzeichnet, dass** alle Schichten (2, 3, 4, 5, 8, 11) aus einem Material hergestellt sind, das mit einem Kompostierungsprozess kompatibel ist.

13. Kapsel (100), die einen Einschluss (101) umfasst, der bevorzugt aus einem kompostierbaren Material hergestellt ist, wobei der Einschluss (101) eine Unterbringungszone (106) mit einer Öffnung (103) aufweist; ein Abdeckelement (1) nach einem der vorstehenden Ansprüche, dass an dem Einschluss (101) angebracht ist, um die Öffnung (103) abzudichten; bevorzugt eine Zubereitung, bevorzugter Pulver, zum Herstellen gebrühter Getränke, die in der Unterbringungszone (106) platziert sind.

## Revendications

1. Élément de couvercle (1) pour sceller des capsules (100) destiné à être utilisé dans la préparation de boissons infusées, comprenant :
- une couche principale (2) ayant une surface interne (2a) apte à faire face à une zone de logement (106) d'une capsule (100) pour la préparation de boissons infusées et une surface externe (2b) qui est opposée à la surface interne (2b), ladite couche principale (2) étant constituée d'un matériau compostable ;
- une couche de protection (3) recouvrant la surface externe (2b) de la couche principale (2) ;
- une couche imperméable
- une couche filtrante (4) sous-jacente à la surface interne (2a) de la couche principale (2); dans lequel
au moins ladite couche principale (2) a une pluralité de lignes de faiblesse (12) formées au moins sur ladite surface externe (2b), ladite couche imperméable (5) étant exempte de lignes de faiblesse
**caractérisé en ce que** la couche imperméable (5) est appliquée sur la surface interne (2a) de la couche principale (2) et comprend au moins une couche métallique (6), et **en ce que** ladite couche filtrante (4) est exempte de lignes de faiblesse.

2. Élément de couverture (1) selon la revendication précédente, **caractérisé en ce que** ladite couche principale (2) est configurée pour se briser au niveau dudit affaiblissement de faiblesse (12) lorsqu'une pression au niveau de ladite surface interne (2a) atteint une valeur comprise entre 5 et 15 bar, de préférence 10 bar.

3. Élément de couverture (1) selon l'une quelconque des revendications précédentes, **caractérisé en ce que** lesdites lignes de faiblesse (12) pénètrent dans la couche principale (2) sur une longueur qui va de 50 % à 100 %, de préférence 80 % de l'épaisseur de ladite couche principale (2).

4. Élément de couverture (1) selon l'une quelconque des revendications précédentes, **caractérisé en ce que** lesdites lignes de faiblesse (12) s'étendent sur toute l'épaisseur de ladite couche (2).

5. Élément de couverture (1) selon l'une quelconque des revendications précédentes, **caractérisé en ce que** ladite couche imperméable (5) est agencée entre la surface interne (2a) de la couche principale (2) et la couche filtrante (4).

6. Élément de couverture (1) selon l'une quelconque des revendications précédentes, **caractérisé en ce que** lesdites lignes de faiblesse (12) sont définies par des encoches formées sur ladite couche principale (2) par enlèvement mécanique de matière.

7. Élément de couverture (1) selon l'une quelconque des revendications 1 à 5, **caractérisé en ce que** lesdites lignes de faiblesse (12) sont définies par des coupes effectuées par ablation thermique de préférence au moyen d'un laser.

8. Élément de couverture (1) selon l'une quelconque des revendications précédentes, **caractérisé en ce que** lesdites lignes de faiblesse (12) s'étendent à travers ladite couche de protection (3).

9. Élément de couverture (1) selon l'une quelconque des revendications précédentes, **caractérisé en ce qu'**il comprend une couche de renforcement (11) agencée entre la surface interne (2a) de ladite couche principale (2) et ladite couche filtrante (4).

10. Élément de couverture (1) selon la revendication précédente, **caractérisé en ce que** ladite couche de renforcement (11) ne présente pas de lignes de faiblesse (12).

11. Élément de couverture (1) selon l'une quelconque des revendications précédentes, **caractérisé en ce que** ladite couche principale (2) et/ou ladite couche de renforcement (11) sont faites de cellophane.

12. Élément de couverture (1) selon l'une quelconque des revendications précédentes, **caractérisé en ce que** toutes les couches (2, 3, 4, 5, 8, 11) sont constituées d'un matériau qui est compatible avec une procédure de compostage.

13. Capsule (100) comprenant une enceinte (101) de préférence en matériau compostable, ladite enceinte (101) ayant une zone de logement (106) avec une ouverture (103); un élément de couvercle (1) selon l'une quelconque des revendications précédentes fixé à ladite enceinte (101) pour sceller ladite ouverture (103); de préférence une préparation, plus préférablement de la poudre, pour la préparation de boissons infusées placées dans ladite zone de logement (106).
